# EUROPEAN PATENT APPLICATION

(11) **EP 4 478 151 A1**
(43) Date of publication of application: **18.12.2024**
(21) Application number: 23189287.8
(22) Date of filing: 02.08.2023
(51) Int. Cl.: G06F 1/16, G08B 21/24

(54) **ANTI-LOST DOCKING STATION AND LOCATING METHOD THEREOF**

(30) Priority: 13.06.2023 CN 202310696517
(71) Applicant: Purplelec Inc. Co., Ltd, Shenzhen 518100 (CN)
(72) Inventor: WANG, Qiang, Shenzhen, 518100 (CN)
(74) Representative: M. Zardi & Co S.A.

(57) **Abstract**

Disclosed is an anti-lost docking station comprising a docking body which includes a power module and a microcontroller, wherein the microcontroller is electrically connected to the power module, the docking body is provided with a plurality of expansion ports and an anti-lost port on its outer surface, wherein the anti-lost port is electrically connected to the power module and a portable hard drive, and wherein the anti-lost port is provided with a connector in its inner side, a connection end of the portable hard drive is configured to be mated with the connector so that the portable hard drive is electrically connected to the microcontroller, and the portable hard drive includes a Bluetooth module and a communication module, which are electrically connected to the microcontroller, and wherein the portable hard drive further includes a storage module that cooperates with the Bluetooth module. The microcontroller in the docking station can control the portable hard drive to continuously send Bluetooth connection requests at a frequency set by the user. In this way, users can clearly see the location of the docking station on their mobile terminals, thus avoiding the risk of losing the docking station.

## Description

### TECHNICAL FIELD

The present disclosure relates to a docking station, in particular to an anti-lost docking station and a locating method thereof.

### BACKGROUND

A docking station, also known as a port replicator, is an external device designed specifically for laptops. The docking station can replicate and expand the ports of a laptop, which allows for a convenient one-stop connection between the laptop and multiple accessories or external devices, such as power adapters, Ethernet cables, mice, external keyboards, printers, and external displays. The docking station is primarily applied to digital devices that expand the functions of the laptop. The docking station typically has a plurality of ports that can be used to connect additional external devices such as USB flash drives, large-screen monitors, keyboards, mice, scanners, and other devices. The docking station can address the problem of a limited number of ports on a laptop, such that users who utilize the docking station can enjoy the convenience and comfort similar to that of a desktop computer in their office, while the flexibility of mobile office can be maintained. However, the docking station is prone to being lost during outdoor travel, making it difficult to find and potentially causing unnecessary losses for users. As a result, docking stations with anti-lost features are developed.

The Chinese patent application No. 202211280700.1 discloses a multifunctional docking station with location-based anti-lost features comprising a portable docking station and an anti-lost means. Once the portable docking station is dropped or lost, the magnetic switch disconnects the magnetic connection with the anti-lost magnet, thereby activating the anti-lost system. when the user is in close proximity to the lost docking station, it can be found by means of an indicator, and when the user is at a greater distance, it can be located in such a way that the coordinates of the lost docking station from a GPS positioning signal transmitter are sent to the user via a communication module. In this way, the anti-lost functionality for the docking station can be achieved. However, the docking station has a limited level of intelligence, and its standby time is short after being lost, causing the challenge to find the lost docking station after an extended period of time. Additionally, replacing or repairing the anti-lost means of the docking station is also difficult if it gets damaged.

Therefore, it is necessary to develop an anti-lost docking station and a locating method thereof.

### SUMMARY

To address the technical deficiencies present in the prior art, this disclosure proposes an anti-lost docking station and a locating method thereof. The docking station utilizes a plug-in portable hard drive to connect with a microcontroller in the docking station, such that the microcontroller can control the portable hard drive to continuously send Bluetooth connection requests at a frequency set by the user. In this way, users can clearly see the location of the docking station on their mobile terminals, thus avoiding the risk of losing the docking station. Furthermore, the portable hard drive is connected to a backup power source in the docking station which allows for extended standby time. This ensures that even if the docking station is lost for an extended period, it can be easily located and found through Bluetooth connection signals. Moreover, the locating method for the docking station can further utilize the location information from nearby devices, making it more convenient for users to locate and find the lost docking station through their mobile devices.

This disclosure solves the above technical problems and meets actual requirements, and the specific technical solutions are described below.

In accordance with various embodiments, the present disclosure provides an anti-lost docking station comprising a docking body, wherein the docking body includes a power module and a microcontroller, the microcontroller is electrically connected to the power module, and wherein the docking body is provided with a plurality of expansion ports and an anti-lost port on its exterior surface, the anti-lost port is electrically connected to the power module and further connected to a portable hard drive. The anti-lost port is provided with a connector in its inner side, and a connection end of the portable hard drive is configured to be mated with the connector so that the portable hard drive is electrically connected to the microcontroller. The portable hard drive includes a Bluetooth module and a communication module, which are electrically connected to the microcontroller. The portable hard drive further includes a storage module that cooperates with the Bluetooth module.

In accordance with an embodiment, the docking body is provided with a charging port on its outer surface, and the charging port is electrically connected to the power module. The power module includes a backup power source and a normal power source, wherein the backup power source is electrically connected to the charging port, and the normal power source is electrically connected to a power plug. The power cord of the power plug extends out of the docking body, and the power plug itself is located on the outside of the docking body.

In accordance with an embodiment, an indicator light is arranged above the anti-lost port, and the indicator light is connected to the power module. The anti-lost port is configured to match the size of the portable hard drive, and the anti-lost port is provided with a latching mechanism for latching the portable hard drive. The latching mechanism includes a switch button that passes through the side wall the docking body and that locates on the outer surface of the docking body.

In accordance with a further embodiment, the latching mechanism includes a spring member, which includes a fixed part and an elastic part and is located on an inner side of an upper wall of the anti-lost port, and a rebound mechanism. The fixed part of the spring member is fixedly connected to the inner side of the upper wall of the anti-lost port, while the elastic part of the spring member is bent towards an inner center of the anti-lost port. The portable hard drive is provided with a latching slot at its front portion that matches with the spring member. And the spring member is cooperated with a rebound mechanism that extends through the anti-lost port and cooperates with the switch button.

In accordance with various embodiments, the present disclosure further provides a locating method for a docking station, comprising:
step S 1: the docking station connects the microcontroller and the portable hard drive through the anti-lost port, and the mobile terminal obtains Bluetooth pairing permission of the docking station and connects to the Bluetooth module thereof;
step S2: the docking station grants management permission to the mobile terminal through the Bluetooth module, and the mobile terminal activates its location service and transmits the location information to the docking station through the communication module;
step S3: the docking station sends Bluetooth connection requests to nearby devices through the Bluetooth module and obtains the GPS location information of those devices, the docking station compares the GPS location information with the location information of the mobile terminal to obtain comparative information, the docking station sends the comparative information to the mobile terminal through the communication module, and the mobile terminal displays the distance and direction between the docking station and the mobile terminal based on the comparative information.

According to some embodiments, in the step S1, the microcontroller of the docking station controls the portable hard drive plugged into the docking station to send Bluetooth connection requests at a set frequency. Upon receiving the Bluetooth connection request, the mobile terminal sends a Bluetooth connection request signal to the docking station. The microcontroller in the docking station evaluates the Bluetooth connection request signal, and then controls the Bluetooth module of the portable hard drive to establish a connection with the mobile terminal.

According to some embodiments, in the step S2, the mobile terminal sends a management permission request to the docking station through a Bluetooth connection. The Bluetooth module of the portable hard drive transfers the management permission request to the microcontroller, which evaluates and grants management permission to the mobile terminal. The docking station sends a location permission request to the mobile terminal via the Bluetooth connection. Upon receiving the location permission request, the mobile terminal activates its location service, and the docking station obtains the location information of the mobile terminal and transmits it to the storage module.

According to some embodiments, in the step S3, the microcontroller in the docking station controls the Bluetooth module to continuously send Bluetooth connection requests to the surrounding devices. When a nearby device receives the Bluetooth connection request and establishes a Bluetooth connection with the docking station, the docking station sends a locating information acquisition request to the device through the Bluetooth connection. Upon the device receives and accepts the locating information acquisition request, the docking station sends the location information of the device to the mobile terminal via the communication module. The microcontroller in the docking station compares the location information of the device with the location information of the mobile terminal to determine the distance and direction between the docking station and the mobile terminal. The microcontroller then sends the information of the distance and direction between the docking station and the mobile terminal to the mobile terminal through the communication module.

According to some embodiments, once the mobile terminal is connected to the Bluetooth module of the portable hard drive, it sends a modification request to the docking station via the Bluetooth connection. The microcontroller in the docking station receives the modification request and then determines whether the mobile terminal has an authorization to make requested modifications. If the mobile terminal has the authorization for the requested modifications, the microcontroller modifies the parameters of the docking station according to the information provided in the modification request. However, if the mobile terminal lacks the authorization for the requested modifications, the parameters of the docking station remain unchanged.

According to some embodiments, the modification request includes changing the frequency at which the docking station sends Bluetooth connection requests and modifying the range within which the Bluetooth connection requests are sent by the docking station.

The anti-lost docking station and the locating method thereof according to various embodiments in the present disclosure provide the following advantageous effects compared to the prior art:
The docking station in the present disclosure obtain location information in such a manner that the portable hard drive sends Bluetooth connection requests to nearby devices, and the location information of the device is then transmitted to the user's mobile terminal through the communication module, which enables users to easily locate and find the lost docking station. The portable hard drive in the docking station sends the Bluetooth connection requests at a set frequency, allowing users to easily locate and find the lost docking station by searching for the Bluetooth connection requests using their mobile terminal. In addition, the portable hard drive is electrically connected to the backup power source in the docking station, such that the Bluetooth connection requests can be continuously transmitted for an extended period, thereby reducing the probability of losing the docking station.

### BRIEF DESCRIPTION OF THE DRAWINGS

Fig. 1 is a schematic diagram illustrating a structure of the anti-lost docking station in the present disclosure.
Fig. 2 is a schematic diagram illustrating a structure of the latching mechanism in the present disclosure.
Fig. 3 is a schematic diagram illustrating the connections of various modules of the anti-lost docking station in the present disclosure.
Fig. 4 is a flowchart illustrating the locating method for the docking station in the present disclosure, wherein:
   1 is a docking body; 2 are expansion ports; 3 is an anti-lost port; 4 is a portable hard drive; 5 is a charging port; 6 is a power plug; 7 is an indicator light; 8 is a latching mechanism; 9 is a switch button; 10 is a spring member; and 11 is a latching slot.

### DETAILED DESCRIPTION

The following description, in conjunction with the accompanying drawings and relevant embodiments, illustrates the implementation of the present disclosure. It should be appreciated that the embodiments provided are not intended to limit the scope of the present disclosure, and the relevant essential elements within the technical field involved in the present disclosure should be considered as known technology within the field, which can be understood and mastered by those skilled in the art.

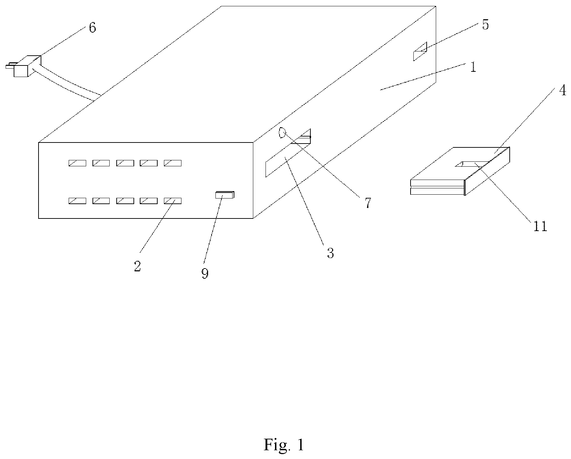

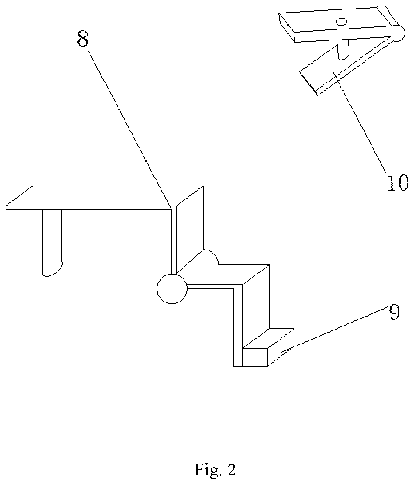

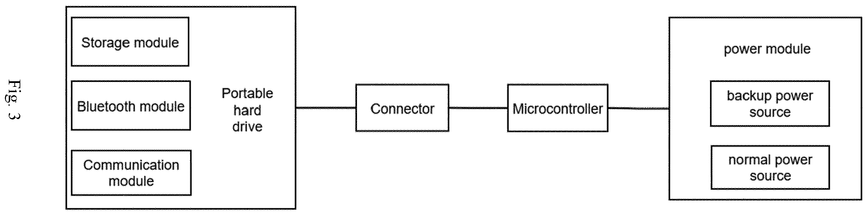

Figs. 1-3 illustrate an anti-lost docking station for expanding the ports of devices according to exemplary embodiments described herein. The anti-loss docking station comprises a docking body 1, the interior of which is provided with a power module for providing power to the docking station, and a microcontroller for controlling the docking station and adjusting its parameters. The microcontroller is electrically connected to the power module to facilitate the power supply from the power module to the microcontroller. The exterior surface of the docking body 1 is provided with a plurality of expansion ports 2 and an anti-lost port 3, wherein the plurality of expansion ports 2 are of different types, which can accommodate most interface types available in the market, and the anti-lost port 3 is electrically connected to the power module and is further connected to a portable hard drive 4 that can utilize the power from the power module for its operation. A connector is arranged in the inner side of the anti-lost port 3, and a connection end of the portable hard drive 4 is configured to be mated with the connector so that the portable hard drive is electrically connected to the microcontroller. A front end of the connector features a plurality of connecting pins, while the connection end of the portable hard drive 4 is equipped with a plurality of connecting holes for mating with the plurality of connecting pins, such that the mating between the connector and the portable hard drive facilitates the microcontroller to control the operation of the portable hard drive 4 and adjust its parameters. The portable hard drive 4 is internally provided with a Bluetooth module for establishing connections with external devices and a communication module for transmitting information to the external environment. The Bluetooth module and the communication module are electrically connected to the microcontroller for convenient control and adjustment by the microcontroller. The portable hard drive 4 is also internally provided with a storage module that cooperates with the Bluetooth module. The storage module is not only capable of storing location information and parameter information but also capable of storing data saved by the user through connecting a mobile terminal to the docking station.

In accordance with an embodiment, the docking body 1 is provided with a charging port 5 on its outer surface, and the charging port 5 is electrically connected to the power module. The power module includes a backup power source and a normal power source, wherein the backup power source is electrically connected to the charging port 5, and the normal power source is electrically connected to a power plug 6. The power cord of the power plug 6 extends out of the docking body 1, and the power plug 6 itself is located on the outside of the docking body 1. The docking station can be powered by plugging in the power plug 6 when in use, while the charging port 5 can be used to charge the backup power source when not in use. The backup power source is usually used to provide the necessary power for the operation of the mobile terminal, and it utilizes a high-capacity capacitor to store a significant amount of energy, enabling extended standby time for the mobile terminal. When using the docking station, it is common to rely on the normal power source, which offers a fast energy conversion and an ample power supply, and ensures sufficient energy for uninterrupted usage. When used outdoors, the docking station utilizes the backup power source to provide energy. In this scenario, the microcontroller will shut down unnecessary operations of other modules in the docking station to conserve power and enable extended standby time, thus preventing the loss of the docking station.

In accordance with an embodiment, an indicator light 7 is arranged above the anti-lost port 3, which is connected to the power module. The indicator light 7 turns green when the portable hard drive 4 is connected and functioning properly with the microcontroller, and it turns red and flashes continuously for 5 seconds before shutting off when the connection between the portable hard drive 4 and the microcontroller is lost. The anti-lost port 3 is configured to match the size of the portable hard drive 4, preventing the portable hard drive 4 from easily falling off due to poor matching. The anti-lost port 3 is provided with a latching mechanism 8 for latching the portable hard drive 4. The latching mechanism 8 includes a switch button 9 that passes through the side wall of the docking body 1 and that locates on the outer surface of the docking body 1. The latching mechanism 8 is used to secure the portable hard drive 4 for preventing it from falling off, and the switch button 9 is designed to disengage the latching mechanism 8 from the portable hard drive 4, allowing the release and removal of the portable hard drive 4.

In accordance with a further embodiment, the latching mechanism 8 includes a spring member 10, which includes a fixed part and an elastic part and is located on the inner side of the upper wall of the anti-lost port 3, and a rebound mechanism. The fixed part of the spring member 10 is fixedly connected to the inner side of the upper wall of the anti-lost port 3, while the elastic part of the spring member 10 is bent towards the inner center of the anti-lost port 3. The front portion of the portable hard drive 4 is provided with a latching slot 11 that matches with the spring member 10. The spring member 10 cooperates with the rebound mechanism. A cylindrical section of the rebound mechanism extends through the anti-lost port 3, and the rebound mechanism cooperates with the switch button 9. The rebound mechanism is a curved fixed plate consisting of a first curved part and a second curved part, with a front side of the first curved part fixedly connected to the switch button 9. The center of the fixed plate is provided with a support pole that allows the fixed plate to tilt up. The second curved part of the fixed plate is provided with a cylindrical section, which passes through the anti-lost port 3 and the fixed part of the spring member 10 and is securely connected to the elastic part of the spring member 10. The interior of the anti-lost port 3 features elastic blocks on both side walls, and the portable hard drive 4 features grooves on its both sides for matching with the elastic blocks.

When the portable hard drive 4 is inserted into the anti-lost port 3, the elastic blocks are inserted into the grooves, while the elastic part of the spring member 10 is bent gradually. As the portable hard drive 4 is inserted to a certain depth, the elastic part of the spring member 10 engages with the latching slot 11. The elastic blocks provide a backward resistance force against the insertion of the portable hard drive 4, but the spring member 10 holds the portable hard drive 4 in place. As a result, the portable hard drive 4 remains stable within the anti-lost port 3 and is connected to the microcontroller via the connector. When the switch button 9 is pressed, the rebound mechanism raises the spring member 10 through the cylindrical section. At this point, the spring member 10 is positioned above the latching slot 11, while the elastic blocks provide a backward resistance force against the insertion of the portable hard drive 4, such that the portable hard drive 4 is ejected from the anti-lost port 3, allowing for its removal.

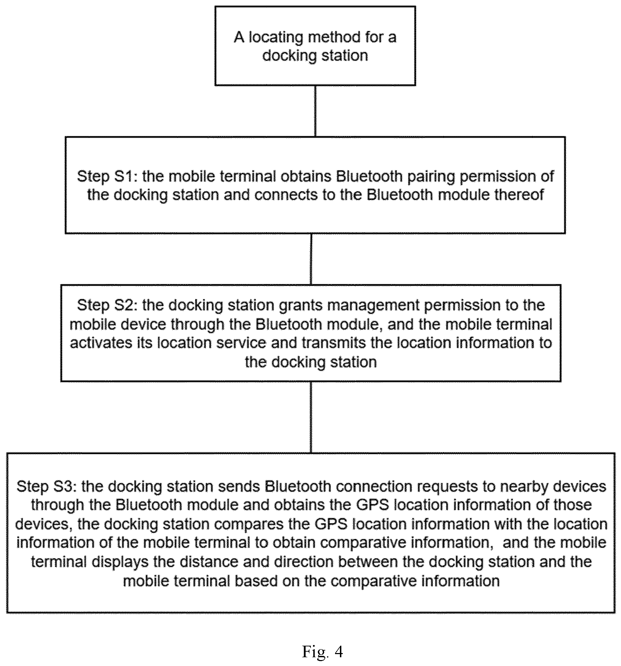

Referring to Fig. 4, the present disclosure provides a locating method for a docking station with the following steps.

Step S1: the docking station connects the microcontroller and the portable hard drive 4 through the anti-lost port 3, and the mobile terminal obtains Bluetooth pairing permission of the docking station and connects to the Bluetooth module thereof.

The microcontroller of the docking station controls the portable hard drive 4 plugged into the docking station to send Bluetooth connection requests at a set frequency. The set frequency is initially determined according to the factory settings, but it can also be modified by the user. Upon receiving the Bluetooth connection request, the mobile terminal sends a Bluetooth connection request signal to the docking station. The microcontroller in the docking station evaluates the Bluetooth connection request signal, and then controls the Bluetooth module of the portable hard drive 4 to establish a connection with the mobile terminal.

Step S2: the docking station grants management permission to the mobile terminal through the Bluetooth module, and the mobile terminal activates its location service and transmits the location information to the docking station through its communication module.

The mobile terminal sends a management permission request to the docking station through a Bluetooth connection. The Bluetooth module of the portable hard drive 4 transfers the management permission request to the microcontroller, which evaluates and grants management permission to the mobile terminal. The docking station sends a location permission request to the mobile terminal via the Bluetooth connection. Upon receiving the location permission request, the mobile terminal activates its location service, and the docking station obtains the location information of the mobile terminal and transmits it to the storage module.

Once the mobile terminal is connected to the Bluetooth module of the portable hard drive 4, it sends a modification request to the docking station via the Bluetooth connection. The microcontroller in the docking station receives the modification request and then determines whether the mobile terminal has an authorization to make requested modifications. If the mobile terminal has the authorization for the requested modifications, the microcontroller modifies the parameters of the docking station according to the information provided in the modification request. However, if the mobile terminal lacks the authorization for the requested modifications, the parameters of the docking station remain unchanged. The modification request includes changing the frequency at which the docking station sends Bluetooth connection requests and modifying the range within which the Bluetooth connection requests are sent by the docking station.

Step S3: the docking station sends Bluetooth connection requests to nearby devices through the Bluetooth module and obtains the GPS location information of those devices. The docking station compares the GPS location information of those devices with the location information of the mobile terminal to obtain comparative information. The docking station sends the comparative information to the mobile terminal through the communication module, and the mobile terminal displays the distance and direction between the docking station and the mobile terminal based on that information.

The microcontroller in the docking station controls the Bluetooth module to continuously send Bluetooth connection requests to the surrounding devices. When a nearby device receives the Bluetooth connection request and establishes a Bluetooth connection with the docking station, the docking station sends a locating information acquisition request to the device through the Bluetooth connection. Upon the device receives and accepts the locating information acquisition request, the docking station sends the location information of the device to the mobile terminal via the communication module. The microcontroller in the docking station compares the location information of the device with the location information of the mobile terminal to determine the distance and direction between the docking station and the mobile terminal. The microcontroller then sends the information of the distance and direction between the docking station and the mobile terminal to the mobile terminal through the communication module.

The docking station according to various embodiments of the present disclosure utilizes a plug-in portable hard drive 4 to connect with the microcontroller. The plug-in portable hard drive 4 makes it easier to replace, and it also includes a storage module, making the docking station more versatile and multifunctional. The plug-in design of the portable hard drive 4 allows the microcontroller in the docking station to control the portable hard drive 4 to continuously send Bluetooth connection requests at a frequency set by the user, such that the continuous transmission of Bluetooth connection requests makes it easier for the user to intercept and detect such connection signals. In this way, users can clearly see the location of the docking station on their mobile terminals, thus avoiding the risk of losing the docking station. Furthermore, the portable hard drive 4 is connected to a backup power source in the docking station which allows for extended standby time. This ensures that even if the docking station is lost for an extended period, it can be easily located and found through Bluetooth connection signals. The locating method according to various embodiments of the present disclosure can further utilize the location information from nearby devices, making it more convenient for users to locate and find the lost docking station through their mobile devices.

The aforementioned are merely preferred embodiments of the present disclosure. It should be appreciated that those skilled in the art can make various modifications and refinements without departing from the scope of the invention as claimed.

## Claims

1. An anti-lost docking station comprising a docking body (1), **characterized in that** the docking body (1) includes a power module and a microcontroller, wherein the microcontroller is electrically connected to the power module,
the docking body (1) is provided with a plurality of expansion ports (2) and an anti-lost port (3) on its outer surface, wherein the anti-lost port (3) is electrically connected to the power module and a portable hard drive (4), and wherein the anti-lost port (3) is provided with a connector in its inner side,
a connection end of the portable hard drive (4) is configured to be mated with the connector so that the portable hard drive is electrically connected to the microcontroller, and
the portable hard drive (4) includes a Bluetooth module and a communication module, wherein the Bluetooth module and the communication module are electrically connected to the microcontroller, and wherein the portable hard drive (4) further includes a storage module that cooperates with the Bluetooth module.

2. The anti-lost docking station according to claim 1, **characterized in that** the docking body (1) is provided with a charging port (5) on its outer surface, which is electrically connected to the power module, and the power module includes a backup power source and a normal power source, wherein the backup power source is electrically connected to the charging port (5), and the normal power source is electrically connected to a power plug (6), and wherein a power cord of the power plug (6) extends out of the docking body (1), and the power plug (6) itself is located on the outside of the docking body (1).

3. The anti-lost docking station according to claim 1, **characterized in that** an indicator light (7) is arranged above the anti-lost port (3), which is connected to the power module, and the anti-lost port (3) is sized to match the portable hard drive (4), wherein the anti-lost port (3) is provided with a latching mechanism (8) for latching the portable hard drive (4), and wherein the latching mechanism (8) includes a switch button (9) that extends through the outer surface of the docking body (1), and the switch button (9) works in conjunction with the anti-lost port (3).

4. The anti-lost docking station according to claim 3, **characterized in that** the latching mechanism (8) includes a spring member (10), which includes a fixed part and an elastic part and is located on an inner side of an upper wall of the anti-lost port (3), wherein the fixed part of the spring member (10) is fixedly connected to the inner side of the upper wall of the anti-lost port (3), and the elastic part of the spring member (10) is bent towards an inner center of the anti-lost port (3), wherein the portable hard drive (4) is provided with a latching slot (11) at its front portion that matches with the spring member (10).

5. The anti-lost docking station according to claim 4, **characterized in that** the latching mechanism (8) includes a rebound mechanism, which is a curved fixed plate consisting of a first curved part and a second curved part, wherein a front side of the first curved part is fixedly connected to the switch button (9), and the second curved part of the fixed plate is provided with a cylindrical section, which passes through the anti-lost port (3) and the fixed part of the spring member (10) and is securely connected to the elastic part of the spring member (10), and the center of the fixed plate is provided with a support pole.

6. A locating method for a docking station, which is **characterized by** being applied to the anti-lost docking station according to any one of claims 1-5, and the locating method comprising:
step S1: the docking station connects the microcontroller and the portable hard drive (4) through the anti-lost port (3), and the mobile terminal obtains Bluetooth pairing permission of the docking station and connects to the Bluetooth module thereof;
step S2: the docking station grants management permission to the mobile terminal through the Bluetooth module, and the mobile terminal activates its location service and transmits location information to the docking station through the communication module; and
step S3: the docking station sends Bluetooth connection requests to nearby devices through the Bluetooth module and obtains GPS location information of those devices, the docking station compares the GPS location information with the location information of the mobile terminal to obtain comparative information, the docking station sends the comparative information to the mobile terminal through the communication module, and the mobile terminal displays the distance and direction between the docking station and the mobile terminal.

7. The locating method for a docking station according to claim 6, **characterized in that** in the step S1, the microcontroller of the docking station controls the portable hard drive (4) plugged into the docking station to send Bluetooth connection requests at a set frequency,
the mobile terminal sends a Bluetooth connection request signal to the docking station upon receiving the Bluetooth connection request, and
the microcontroller evaluates the Bluetooth connection request signal, and then controls the Bluetooth module of the portable hard drive (4) to establish a connection with the mobile terminal.

8. The locating method for a docking station according to claim 6, **characterized in that** in the step S2, the mobile terminal sends a management permission request to the docking station through a Bluetooth connection,
the Bluetooth module of the portable hard drive (4) transfers the management permission request to the microcontroller, and then the microcontroller evaluates and grants management permission to the mobile terminal,
the docking station sends a location permission request to the mobile terminal via the Bluetooth connection,
the mobile terminal activates its location service upon receiving the location permission request, and
the docking station obtains the location information of the mobile terminal and transmits it to the storage module.

9. The locating method for a docking station according to claim 6, **characterized in that** in the step S3, the microcontroller in the docking station controls the Bluetooth module to continuously send Bluetooth connection requests to nearby devices,
when a nearby device receives the Bluetooth connection request and establishes a Bluetooth connection with the docking station, the docking station sends a locating information acquisition request to the device through the Bluetooth connection,
upon the device receives and accepts the locating information acquisition request, the docking station sends the location information of the device to the mobile terminal via the communication module,
the microcontroller in the docking station compares the location information of the device with the location information of the mobile terminal to determine the distance and direction between the docking station and the mobile terminal, and
the microcontroller then sends the information of the distance and direction between the docking station and the mobile terminal to the mobile terminal through the communication module.

10. The locating method for a docking station according to claim 7, **characterized in that** the mobile terminal sends a modification request to the docking station via the Bluetooth connection once connected to the Bluetooth module of the portable hard drive (4), and
the microcontroller in the docking station receives the modification request and then determines whether the mobile terminal has an authorization to make requested modifications, wherein if the mobile terminal has the authorization for the requested modifications, the microcontroller modifies the parameters of the docking station according to the information provided in the modification request, and if the mobile terminal lacks the authorization for the requested modifications, the parameters of the docking station remain unchanged.

11. The locating method for a docking station according to claim 10, **characterized in that** the modification request includes changing a frequency at which the docking station sends Bluetooth connection requests and modifying a range within which the Bluetooth connection requests are sent by the docking station.
